# EUROPÄISCHE PATENTANMELDUNG

(11) **EP 1 223 659 A2**
(43) Veröffentlichungstag der Anmeldung: **17.07.2002**
(21) Anmeldenummer: 01129584.7
(22) Anmeldetag: 12.12.2001
(51) Int. Cl.: H02K 1/27

(54) **Permanentmagnet-Rotor mit reduziertem Wirbelstromverlust**

(30) Priorität: 10.01.2001 DE 10100718; 10.01.2001 DE 10100717
(71) Anmelder: Miele & Cie. GmbH & Co., D-33332 Gütersloh (DE)
(72) Erfinder: Kurth, Rolf, 53894 Mechernich (DE); Mayer, Günter, 53902 Bad Münstereifel (DE); Rode, Peter, Dr., 53881 Euskirchen (DE)

(57) **Zusammenfassung**

Die Erfindung betrifft einen Permanentmagnet-Rotor (1) für eine elektrische Maschine, bei dem strahlenförmig um eine Welle (2) angeordnete Magnete (4) und dazwischen angeordnete Flussleitstücke (5) mit im wesentlichen kreissegmentförmigem Querschnitt zwischen zwei mit der Welle (2) verbundenen Deckplatten (31, 32) gehalten und mittels stabförmiger Halteelemente (6) fixiert werden, die durch Aussparungen (52) in den Flussleitstücken (5) geführt und mit den Deckplatten (31, 32) verbunden sind. Um einen Motor der eingangs genannten Art auf einfache und preiswerte Weise gegen Wirbelstromverluste zu schützen, wird vorgeschlagen, dass die stabförmigen Elemente (Bolzen 6) jeweils nur mit einer Deckplatte verbunden sind und auf der dieser Verbindung gegenüberliegenden Seite vor der Deckplatte enden. In einer anderen Ausführungsform der Erfindung sind die stabförmigen Halteelemente und die Deckplatten einstückig in einem Spritzgussverfahren gefertigt.

## Beschreibung

Die Erfindung betrifft einen Permanentmagnet-Rotor für eine elektrische Maschine, bei dem strahlenförmig um eine Welle angeordnete Magnete und dazwischen angeordnete Flussleitstücke mit im wesentlichen kreissegmentförmigem Querschnitt zwischen zwei mit der Welle verbundenen Deckplatten gehalten und mittels stabförmiger Halteelemente fixiert werden, die durch Aussparungen in den Flussleitstücken geführt und mit den Deckplatten verbunden sind.

Ein Permanentmagnet-Rotor dieser Bauart ist beispielsweise aus der DE 35 17 883 A1 bekannt. Dabei werden wegen der einfachen Geometrie Ferritmagnete mit rechteckigem Querschnitt strahlenförmig um eine Welle herum angeordnet. Zur Erhöhung des magnetischen Flusses werden zwischen den Magneten Flussleitstücke aus geschichteten Blechsegmenten eingesetzt, die durch Vorsprünge gleichzeitig zur Halterung der Magnete in radialer Richtung dienen. Um einen magnetischen Rückschluss über die Welle zu vermeiden, muss diese aus nichtmagnetischem Material gefertigt sein, was sehr teuer ist. Alternativ können an der Welle zwei Deckplatten aus magnetisch nichtleitendem Material befestigt werden, zwischen denen Segmente und Magnete koaxial und mit Abstand zur Welle befestigt werden. Da bei hohen Drehzahlen starke Fliehkräfte auf die Segmente und auf die Magnete wirken, erfolgt die Befestigung zwischen den Deckplatten durch Bolzen oder andere stabförmige Halteelementen, die durch Öffnungen in den Segmenten hindurchgeführt und mit den Deckplatten verbunden sind (bei der DE 35 17 883 A1 werden in Nuten geführte Keile verwendet).

Der klassische Einsatz eines solchen Permanentmagnet-Rotors mit Flusskonzentration erfolgt in elektrischen Maschinen, die Statoren mit eingezogener Wicklung besitzen. Bei Antrieben, bei denen eine große Drehzahlspreizung erforderlich ist, beispielsweise für Waschmaschinen, besteht der Wunsch, anstelle der eingezogenen Wicklung eine Einzelpolwicklung zu verwenden. Hierdurch entsteht folgendes Problem:
In der Einzelpolwicklung wird zusätzlich zur sinusförmigen Speisespannung eine Spannung mit doppelter Frequenz induziert. Bei einer elektrischen Verbindung zwischen den Bolzen und den Deckplatten wirkt der vorbeschriebene Aufbau des Rotors aus Deckplatten und Bolzen wie ein Käfigläufer, in dem Ströme induziert werden. Dies führt zu Oberwellen und Leistungsverlusten. Zur Vermeidung dieses Phänomens könnten elektrisch nichtleitende Bolzen oder Deckplatten oder eine Isolation im Verbindungsbereich zwischen Bolzen und Deckplatten verwendet werden. Werden hierzu Kunststoffplatten, -bolzen oder -buchsen eingesetzt, wird die Festigkeit des Aufbaus geschwächt, was bei großen Drehzahlen zu einem Lockern der Bauteile führt. Hieraus würde wiederum eine zusätzliche Geräuschentwicklung entstehen. Isolationsmaterial mit größerer Festigkeit würden den Rotor verteuern. Außerdem entsteht ein in der Fertigung aufwändiger Aufbau, da viele Einzelteile verwendet werden.

Der Erfindung stellt sich somit das Problem, einen Motor der eingangs genannten Art auf einfache und preiswerte Weise gegen Wirbelstromverluste zu schützen.

Erfindungsgemäß wird dieses Problem durch Permanentmagnet-Rotoren für eine elektrische Maschine mit den Merkmalen der unabhängigen Patentansprüche 1 und 5 gelöst. Vorteilhafte Ausgestaltungen und Weiterbildungen des Permanentmagnet-Rotors nach Anspruch 1 ergeben sich aus den nachfolgenden Unteransprüchen.

Die mit der Erfindung erreichbaren Vorteile bestehen bei beiden Ausführungsformen des Permanentmagnet-Rotors (nach den Ansprüchen 1 und 5) in einer einfachen Möglichkeit zur Vermeidung von Wirbelstromverlusten ohne die Verwendung von Isolationselementen.

In einer vorteilhaften Ausführungsform des Permanentmagnet-Rotors nach Anspruch 1 ragen die stabförmigen Elemente wechselseitig in die Flussleitstücke. Hierdurch wird eine gleichmäßige und symmetrische Belastung der Deckplatten gewährleistet und Unwuchten vermieden. Es ist insbesondere vorteilhaft, wenn eine magnetisch nichtleitende Hülse den aus Deckplatten, Flussleitstücken und Magneten bestehenden Rotorgrundkörper umgibt. Hierdurch erfolgt zum einen eine mechanische Entlastung der Bolzen, welche sich insbesondere bei hohen Drehzahlen und den damit verbundenen großen Fliehkräften vorteilhaft auswirkt. Zum anderen ist bei Anbringung einer solchen Hülse ein einfaches Vergießen des Rotors möglich, da die Hülse als abdichtender Mantel wirkt. Ein solches Vergießen bewirkt eine zusätzliche mechanische Verfestigung der Rotor-Einzelteile und verhindert deren Lösen unter großer Kraftbeanspruchung.

Ausführungsbeispiele der Erfindungen sind in den Zeichnungen rein schematisch dargestellt und wird nachfolgend näher beschrieben. Es zeigt
- Figur 1: einen erfindungsgemäß aufgebauten Permanentmagnet-Rotor (1) in perspektivischer Darstellung;
- Figur 2: einen Querschnitt (B/B) durch den Rotor (1) gemäß Figur 1;
- Figur 3: einen Längsschnitt (C/C) durch den Rotor (1);
- Figur 4: einen Längsschnitt (A/A) durch den Rotor (1);
- Figur 5: ein Rotorblech (54) in der Draufsicht;
- Figur 6: die perspektivische Ansicht des Rotorblechpakets (11).
- Figur 7: eine weitere Ausführungsform eines erfindungsgemäß aufgebauten Permanentmagnet-Rotors (101) in perspektivischer Darstellung;
- Figur 8: einen Querschnitt (B'/B') durch den Rotor (101) gemäß Figur 7;
- Figur 9: einen Längsschnitt (A'/A') durch den Rotor (101);
- Figur 10: ein Rotorblech (154) in der Draufsicht;
- Figur 11: die perspektivische Ansicht des Rotorblechpakets (111).

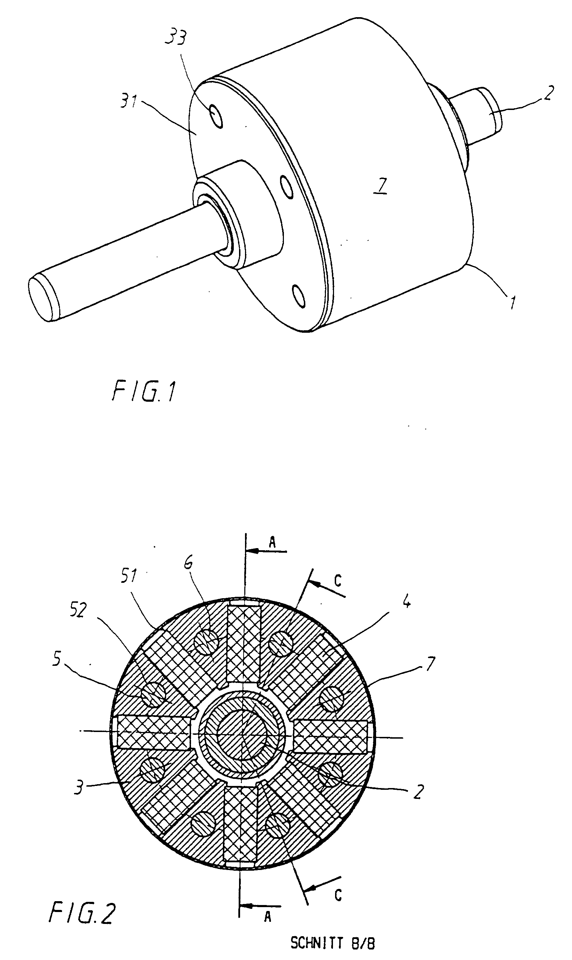

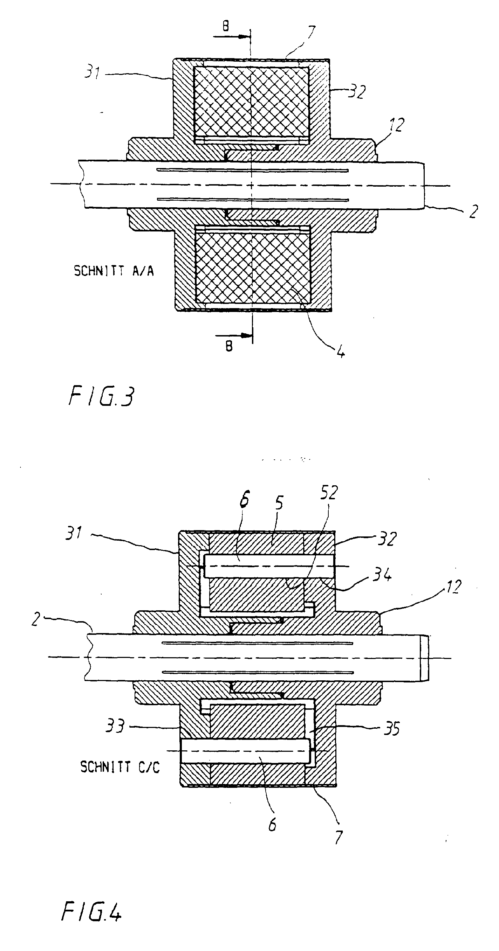

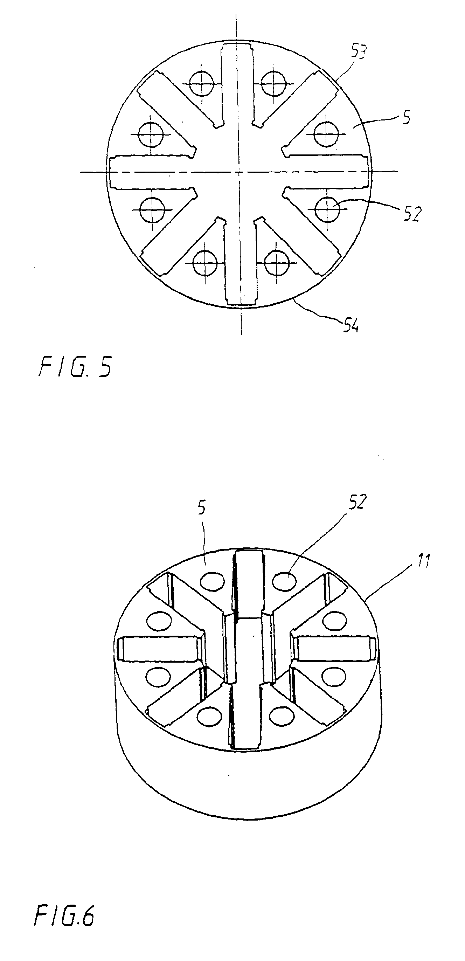

Der in den Figuren 1 bis 4 dargestellte Rotor (1) einer elektrischen Maschine besitzt eine Welle (2) aus magnetischem Stahl. Die Welle (2) trägt zwei im wesentlichen kreisrunde Deckplatten (31, 32) aus nichtmagnetischem Material, beispielsweise Aluminium oder Aluminiumdruckguss, die zueinander zentriert sind und mit der Welle (2) kraft- und formschlüssig verbunden sind. Zwischen den Deckplatten (31, 32) sind strahlenförmig um die Welle (2) Ferritmagnete (4) mit rechteckigem Querschnitt angeordnet. Diese werden von Flussleitstücken (5) mit kreissegmentförmigem Querschnitt gehalten, die hierzu an den nach innen und außen gerichteten Umfangsseiten Vorsprünge (51) aufweisen, die die Magnete (4) hintergreifen. Die Flussleitstücke (5) sind aus geschichteten Blechen (s. Figur 5) gefertigt.

Zu ihrer Befestigung an den Deckplatten (31, 32) sind sie mit Bohrungen (52) versehen, die sich parallel zur Wellenachse erstrecken. Die Deckplatten (31, 32) weisen korrespondierende Bohrungen (33, 34) auf. Der Bohrung (33) in einer Deckplatte (31) liegt ein Sackloch (35) mit erweitertem Durchmesser in der anderen Platte (32) gegenüber, wobei Bohrungen und Sacklöcher in jeder Deckplatte (31, 32) jeweils abwechselnd angeordnet sind. Durch die Bohrung (33) ist ein Bolzen (6) gesteckt, der auf der einen Seite eine Verbindung zwischen der Deckplatte (31) und einem Flussleitstück (5) herstellt und auf der anderen Seite in der Bohrung (52) des Flussleitstücks (5) oder vor der Deckplatte (32) innerhalb des Sacklochs (35) enden, so dass auf dieser Seite eine Verbindung zwischen Deckplatte (32) und Bolzen (6) nicht zustande kommt.

Zur Vereinfachung der Fertigung sind die Flussleitstücke (5) zunächst durch einen umlaufenden Rand (53) verbunden und werden als einstückige Ausfallteile (Bleche 54, s. Figur 5) aus der Ständerbohrung (nicht dargestellt) gestanzt. Der Durchmesser der Bleche (54) ist derart bemessen, dass der umlaufende Rand (53) über die Deckplatten (31, 32) hinausragt. Einzelne Bleche (54) werden durch Stanzpaketieren zu einem in Figur 6 dargestellten Rotorblechblechpaket (11) verbunden. In dieses Rotorblechpaket (11) werden die Magnete (4) eingelegt, anschließend erfolgt das Einsetzen der Bolzen (6). Danach werden die Deckplatten (31, 32) auf die Bolzen (6) aufgesetzt und die Welle (2) eingepresst. Der so entstandene Rotorgrundkörper (12) wird bis auf den Durchmesser der Deckplatten (31, 32) abgedreht und so der umlaufende Rand (53) zwischen den Flussleitstücken (5) entfernt. Hierdurch liegen die Magnete (4) frei. Auf den Rotorgrundkörper (12) wird eine magnetisch nichtleitende Hülse (7) aus Edelstahl aufgeschrumpft. Die Zwischenräume im Rotorgrundkörper (12) sind mit Gießharz (nicht dargestellt) ausgegossen.

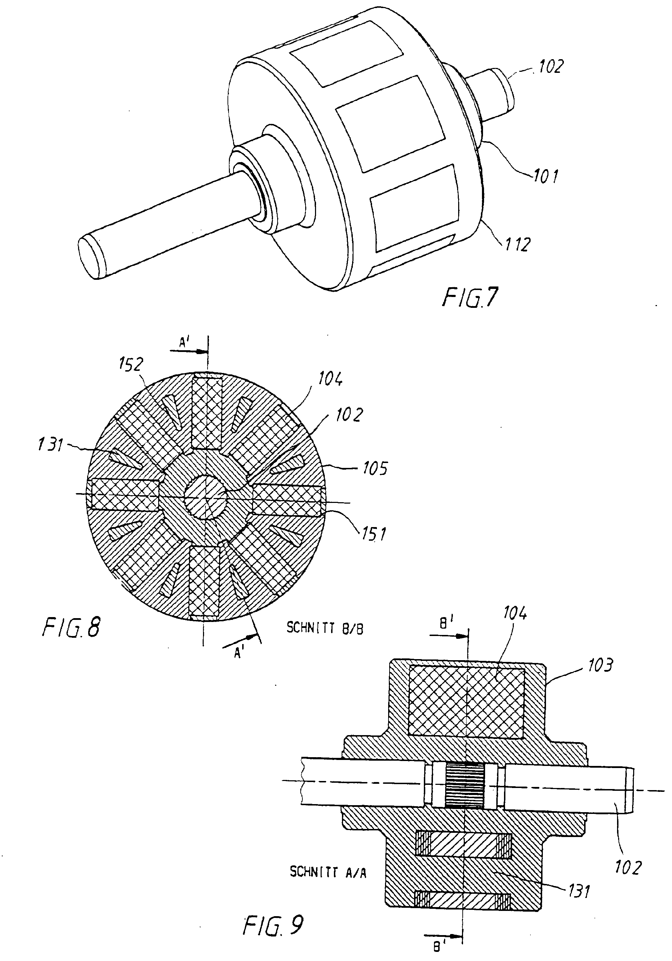

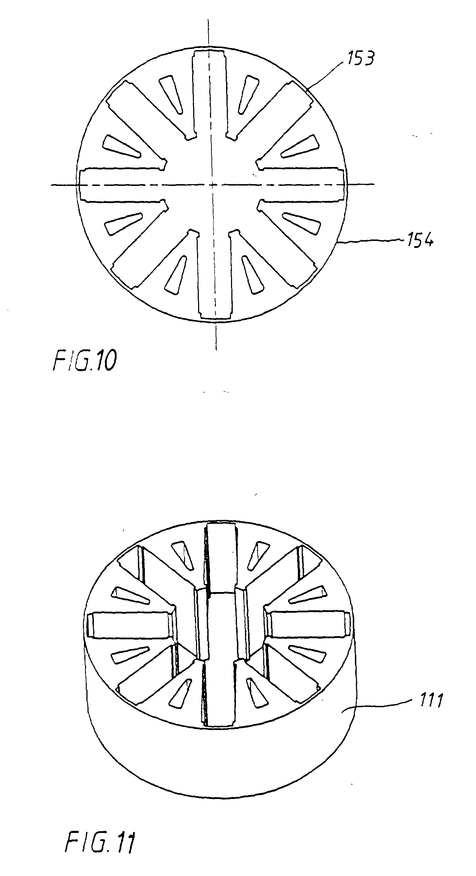

Der in den Figuren 7 bis 9 dargestellte Rotor (101) einer elektrischen Maschine besitzt eine Welle (102) aus magnetischem Stahl. Zwischen zwei Deckplatten (103) sind strahlenförmig um die Welle Ferritmagnete (104) mit rechteckigem Querschnitt angeordnet. Diese werden von Flussleitstücken (105) mit kreissegmentförmigem Querschnitt gehalten, die hierzu an den nach innen und außen gerichteten Umfangsseiten Vorsprünge (151) aufweisen, die die Magnete (104) hintergreifen. Die Flussleitstücke (105) sind aus geschichteten Blechen (s. Figur 10) gefertigt.

Zu ihrer Befestigung an den Deckplatten (103) sind die Flussleitstücke (105) mit Aussparungen (152) versehen, die einen keilförmigen Querschnitt besitzen und sich parallel zur Wellenachse erstrecken. Durch die Aussparungen (152) sind stabförmige Halteelemente (131) geführt, die mit den Deckplatten (103) dadurch verbunden sind, dass Deckplatte (103) und Halteelemente (131) einstückig in einem Spritzgussverfahren aus Aluminiumdruckguss hergestellt worden sind.

Zur Vereinfachung der Fertigung sind die Flussleitstücke (105) zunächst durch einen umlaufenden Rand (153) verbunden und werden als einstückige Ausfallteile (Bleche 154, s. Figur 10) aus der Ständerbohrung (nicht dargestellt) gestanzt. Der Durchmesser der Bleche (154) ist derart bemessen, dass der umlaufende Rand (153) über die Deckplatten (103) hinausragt. Einzelne Bleche (154) werden durch Stanzpaketieren zu einem in Figur 11 dargestellten Rotorpaket (111) verbunden. In dieses Rotorpaket (111) werden die Magnete (104) eingelegt, anschließend werden die Welle (102), die Magnete (104) und die Flussleitstücke (105) in ein Werkzeug (nicht dargestellt) eingelegt und mit Aluminiumdruckguss umspritzt.

Der so entstandene Rotorgrundkörper (112) wird bis auf den Durchmesser der Deckplatten (103) abgedreht und so der umlaufende Rand (153) zwischen den Flussleitstücken (105) entfernt. Hierdurch liegen die Flussleitstücke (105) frei, vor den Magneten (104) steht ein dünnwandiger Steg aus Aluminiumdruckguss. Auf den Rotorgrundkörper (112) kann ebenfalls eine magnetisch nichtleitende Hülse (nicht dargestellt) aus Edelstahl aufgeschrumpft werden.

## Patentansprüche

1. Permanentmagnet-Rotor (1) für eine elektrische Maschine, bei dem strahlenförmig um eine Welle (2) angeordnete Magnete (4) und dazwischen angeordnete Flussleitstücke (5) mit im wesentlichen kreissegmentförmigem Querschnitt zwischen zwei mit der Welle (2) verbundenen Deckplatten (31, 32) gehalten und mittels stabförmiger Halteelemente (Bolzen 6) fixiert werden, die durch Aussparungen (Bohrungen52) in den Flussleitstücken (5) geführt und mit den Deckplatten (31, 32) verbunden sind,
**dadurch gekennzeichnet,**
**dass** die stabförmigen Elemente (Bolzen 6) jeweils nur mit einer Deckplatte verbunden sind und auf der dieser Verbindung gegenüberliegenden Seite vor der Deckplatte enden.

2. Permanentmagnet-Rotor (1) für eine elektrische Maschine nach Anspruch 1,
**dadurch gekennzeichnet,**
**dass** die stabförmigen Elemente (Bolzen 6) wechselseitig in die Flussleitstücke ragen.

3. Permanentmagnet-Rotor (1) für eine elektrische Maschine nach Anspruch 1 oder 2,
**dadurch gekennzeichnet,**
**dass** eine magnetisch nichtleitende Hülse (7) den aus Deckplatten (31, 32), Flussleitstücken (5) und Magneten (4) bestehenden Rotorgrundkörper (12) umgibt.

4. Permanentmagnet-Rotor (1) für eine elektrische Maschine nach Anspruch 3,
**dadurch gekennzeichnet,**
**dass** der Raum innerhalb der Hülse (7) durch Gießharz versiegelt ist.

5. Permanentmagnet-Rotor (101) für eine elektrische Maschine, bei dem strahlenförmig um eine Welle (102) angeordnete Magnetblöcke (104) und dazwischen angeordnete Flussleitstücke (105) mit im wesentlichen kreissegmentförmigem Querschnitt zwischen zwei mit der Welle (102) verbundenen Deckplatten (103) gehalten und mittels stabförmiger Halteelemente (131) fixiert werden, die durch Aussparungen (152) in den Flussleitstücken (105) geführt und mit den Deckplatten (103) verbunden sind,
**dadurch gekennzeichnet,**
**dass** die stabförmigen Halteelemente (131) und die Deckplatten (103) als einstückig in einem Spritzgussverfahren gefertigtes Bauteil ausgebildet sind.
